# EUROPÄISCHE PATENTSCHRIFT

(11) **EP 2 130 411 B1**
(45) Veröffentlichungstag und Bekanntmachung des Hinweises auf die Patenterteilung: **05.07.2017**
(21) Anmeldenummer: 08707261.7
(22) Anmeldetag: 24.01.2008
(51) Int. Cl.: H05B 41/28, H05B 41/282

(54) **DIGITALE STEUERSCHALTUNG EINES BETRIEBSGERÄTS FÜR LEUCHTMITTEL**
DIGITAL CONTROL CIRCUIT OF AN OPERATING DEVICE FOR LAMPS
CIRCUIT DE COMMANDE NUMÉRIQUE D'UN APPAREIL ÉLECTRIQUE POUR MOYEN D'ÉCLAIRAGE

(30) Priorität: 28.03.2007 DE 10714982; 30.03.2007 DE 10715508
(43) Veröffentlichungstag der Anmeldung: 09.12.2009
(60) Teilanmeldung: 10196374.2
(73) Patentinhaber: Tridonic GmbH & Co KG, 6851 Dornbirn (AT)
(72) Erfinder: ZUDRELL-KOCH, Stefan, A-6845 Hohenems (AT); MARENT, Günter, A-6780 Bartholomäberg (AT)
(74) Vertreter: Rupp, Christian
(86) Internationale Anmeldenummer: PCT/EP2008/000550
(87) Internationale Veröffentlichungsnummer: WO 2008/116520

(56) Entgegenhaltungen:
- EP-A1- 0 871 348
- EP-A2- 1 748 682
- WO-A-95/28819
- US-A- 5 907 223

## Beschreibung

Die vorliegende Erfindung bezieht sich allgemein auf das Gebiet der Betriebsgeräte für Leuchtmittel. Typische Beispiele sind dabei elektronische Vorschaltgeräte zum Betrieb von Gasentladungslampen, Hochdrucklampen, Leuchtdioden etc. Allgemein ist es Aufgabe dieser Betriebsgeräte, das zugeordnete Leuchtmittel mit einer Versorgungsspannung mit angepasster Spannung und/oder Frequenz zu versorgen.

Die Erfindung bezieht sich insbesondere auf Betriebsgeräte mit Steuereinheiten, denen bspw. abhängig von der Konfiguration des Betriebsgeräts unterschiedliche Messignale zur Leistungsregelung der angeschlossenen Leuchtmittel zuführbar sind. Dies kann angewandt werden bei Betriebsgeräten für konstante Leistung ("Fixed Output") oder Betriebsgeräte, bei denen die Leistung der Leuchtmittel auf einen fest eingestellten oder von außen vorgebaren Wert ("Dimming") geregelt wird. Zum Zwecke dieser Leistungsregelung wird ein die Leistung direkt oder indirekt wiedergebender Parameter von einem die Leuchtmittel enthaltenden Lastkreis an eine Steuereinheit zurückgeführt. Die Steuereinheit vergleicht dann diesen Istwert mit einem Sollwert für die Leuchtmittelleistung. Ausgehend von diesem Vergleich stellt die Steuereinheit dann einen die Lampenleistung beeinflussenden Parameter ein, der ganz allgemein beispielsweise die Versorgungsspannung und insbesondere die Frequenz und/oder das Tastverhältnis der am Leuchtmittel anliegenden Spannung sein kann, wenn die Leistungskennlinie des Leuchtmittels frequenzabhängig ist. Die Leistung von Leuchtdioden kann beispielsweise bevorzugt mittels PWM-Ansteuerung erfolgen.

Es ist bereits bekannt, für einen derartigen Regelvorgang digitale integrierte Schaltungen beispielsweise in Form von ASICs oder Microcontrollern einzusetzen.

Es gibt aus dem Stand der Technik bekannte Leuchtmittel, bei denen die Leistungssteuerung über die Einstellung oder der Frequenz oder des Taktverhältnisses der Versorgungsspannung der Leuchtmittel erfolgt.

Ein Beispiel dafür ist die Versorgung von Leuchtmittel über eine Halbbrückenschaltung, die zwischen Masse und einer im wesentlichen konstanten Versorgungsspannung (Busspannung) geschaltet ist. Beispielsweise am Mittenpunkt von zwei Schaltern von der Halbbrückenspannung kann dann ein die Leuchtmittel enthaltener Lastkreis geschaltet werden.

Bei dieser Ausgestaltung gibt es wenigstens zwei Optionen zur Ermittlung Leuchtmittelleistung:
- Zum einen kann der Strom durch die Halbbrücke erfasst werden, wobei in diesem Fall die Leuchtmittelleistungs-Information im zeitlichen Mittelwert dieses Halbbrückenstromsignals "codiert" ist, oder
- Zum anderen kann der Strom durch die mit AC-Versorgungsspannung versorgten Leuchtmittel erfasst werden, wobei in diesem Fall die Leistungsinformation durch die Spitzenwerte des Stroms durch die Leuchtmittel "codiert" ist (der Mittelwert dieses Signals ist im wesentlichen null).

Aus der Druckschrift US 5,907,223 A ist ein AC-AC Betriebsgerät für eine Entladungslampe (z.B., eine Leuchtstofflampe) bekannt, das einen PFC Konverter mit einem Trenntransformator und einen DC-AC Wechselrichter umfasst, der auf der Sekundärseite des Trenntransformators bereitgestellt ist. Der Wechselstrom Eingang ist von der Lampe durch den Transformator im PFC Konverter isoliert und die Schaltfrequenz des PFC Konverters ist höher als die Lampenstromfrequenz (und die Schaltfrequenz des DC-AC Wechselrichters) . Insgesamt stellt das System ein Zweifrequenz-Betriebsgerät dar, das einen isoliert PFC Konverter aufweist.

Die Druckschrift EP 1 748 682 A2 offenbart eine Vorrichtung zum Betreiben einer Entladungslampe.

Aufgabe der vorliegenden Erfindung ist es nunmehr, eine Technik bereitzustellen, die es ermöglicht, Betriebsgerät im Sinne eines Plattform-Ansatzes derart auszulegen, dass es sich ohne externe Konfigurierung automatisch auf das jeweils aktuell anliegende Rückführsignal "einstellt".

Diese Aufgabe wird erfindungsgemäß durch die Merkmale der unabhängigen Ansprüche gelöst. Vorteilhafte Ausgestaltungen sind in den abhängigen Ansprüche niedergelegt.

Gemäß einem ersten Aspekt der Erfindung ist also eine integrierte digitale Steuerschaltung für ein Betriebsgerät für Leuchtmittel vorgesehen. Die Steuerschaltung weist einen Ausgang zur Einstellung des Leuchtmittelbetriebs auf. Die Steuerschaltung weist einen Eingang für ein Signal auf, das die Leuchtmittelleistung wiedergibt. Dabei können an diesen Eingang je nach Konfiguration des Betriebsgeräts unterschiedliche Signaltypen angelegt werden, die bspw. ausgehend von unterschiedlichen Bereichen des Betriebsgeräts her stammen. Dabei ist die digitale integrierte Steuerschaltung derart ausgeführt, dass der Eingang intern mit wenigstens zwei unterschiedlichen Auswertungszweigen verbunden ist, deren Ausgänge wiederum zusammengeführt sind. Der Ausgang des Logikglieds wiederum ist mit einer Steuereinheit verbunden.

Jeder der mehreren parallelen Auswertungszweige führt also die Auswertung desselben Signals durch, allerdings anhand unterschiedlicher Sätze an Kriterien. Jedem Auswertungszweig ist also ein Kriteriensatz zugeordnet, der das Signal anhand eines oder mehrerer Kriterien analysiert.

Vorzugsweise sind die Kriteriensätze dabei derart ausgewählt, dass pro potentiell anliegendem Signaltyp nur genau ein und nur ein Kriteriensatz erfüllt ist, so dass nur ein und genau ein Auswertungszweig somit einen Beitrag zu dieser Istsignal-Rückführung für die Leuchtmittelregelung liefert.

In einem nichtbeschränkenden Implementierungsbeispiel der Erfindung ist eine integrierte digitale Steuerschaltung für ein Betriebsgerät für Leuchtmittel vorgesehen. Die Steuerschaltung weist einen Ausgang zur Taktung von Schaltern einer Halbbrückenschaltung mit einstellbarer Frequenz und oder einstellbarem Tastverhältnis auf, wobei an die Halbbrückenschaltung ein die Leuchtmittel enthaltender Lastkreis anschließbar ist. Die Steuerschaltung weist einen Eingang für ein Signal auf, das eine Funktion der Leuchtmittelleistung wiedergibt. Dabei kann dieses Signal wahlweise ein Signal sein, das den Strom durch die Halbbrücke wiedergibt, oder ein Signal, das den Strom durch die Leuchtmittel wiedergibt. In diesem Beispiel sind liegt also in einer konkreten Implementierung eines dieser beiden Signale an. Dabei ist die digitale integrierte Steuerschaltung derart ausgeführt, dass der Eingang intern mit zwei Auswertungszweige verbunden ist, deren Ausgänge wiederum mit einem Logikglied zusammengeführt sind. Der Ausgang des Logikglieds wiederum ist mit einer Steuereinheit zur Einstellung der Frequenz des Halbbrücken-Ansteuersignals verbunden. Es erfolgt somit also eine Einstellung der Frequenz der Schalter der Halbbrücke abhängig von dem Ausgangswerts des Logikglieds.

Die beiden Auswertungszweige weisen jeweils einen Komparator auf Den beiden Komparatoren der Auswertungszweige werden dabei unterschiedliche Referenzspannungen zugeführt. Die unterschiedlichen Referenzspannungen, mit denen das konkret anliegende Signal parallel verglichen wird, sind also ein Beispiel für unterschiedliche Kriterien, denen dasselbe Signal parallel unterworfen wird.

Das Logikglied kann beispielsweise ein ODER-Glied sein.

Die digitale integrierte Schaltung kann insbesondere als Microcontroller oder vorzugsweise als ASIC ausgeführt sein.

Der erste Auswertungszweig ist dabei derart ausgelegt , dass sein Ausgang zwei verschiedene Logikzustände einnehmen kann, wenn das signal an dem Eingang den Halbbrückenstrom wiedergibt, wobei in diesem Fall dann der Ausgang des ersten Auswertungszweigs nur einen zeitlich konstanten Logikwert einnimmt, wenn ein den Strom durch die Leuchtmittel wiedergebendes Signal anliegt.
Das den Halbbrückenstrom wiedergebende Signal kann extern und/oder intern in der Steuerschaltung tiefpassgefiltert sein.
Der erste Auswertungszweig kann einen Komparator aufweisen, dessen Ausgang mit einer Tastverhältnis(Duty Cycle) -Auswerteeinheit verbunden ist. Das Tastverhältnis stellt somit ein weiteres Beispiel für ein Kriterium dar. Der zweite Auswertungszweig ist derart ausgelegt , dass sein Ausgang zwei verschiedene Logikzustände einnehmen kann, wenn das Signal anliegt, das den Strom durch die Leuchtmittel wiedergibt. Wenn dagegen das Signal an dem Eingang anliegt, das den Halbbrückenstrom wiedergibt, nimmt der zweite Auswertungszweig einen konstanten Logikwert ein.

Der zweite Auswertungszweig kann einen Komparator aufweisen, dessen Ausgang mit dem Logikglied verbunden ist.

Die Steuerschaltung kann dazu ausgebildet sein, abhängig von dem logischen Ausgangswert des Logik-Glieds die Frequenz des Halbbrücken-Ansteuersignals einzustellen, vorzugsweise zu erhöhen oder zu erniedrigen, besonders bevorzugt um ein Inkrement zu erhöhen oder zu erniedrigen.

Es kann sich somit also beispielsweise um einen Zweipunktregler handeln.

Die Erfindung bezieht sich auch auf Betriebsgeräte für Leuchtmittel, die eine derartige Steuerschaltung aufweisen. Beispiele sind elektronische Vorschaltgeräte für Gasentladungslampen, Hochdrucklampen oder Leuchtdioden.

Die Erfindung bezieht sich auch auf eine Leuchte, die Leuchtmittel und ein Betriebsgerät der genannten Art aufweist.

Die Erfindung bezieht sich schließlich auch auf Verfahren zur wahlweisen Regelung der Leistung von Leuchtmitteln abhängig von einem Halbbrückenstromsignal oder einen Leuchtmittelstromsignal.

Weitere Vorteile, Merkmale und Eigenschaften der Erfindung sollen nunmehr bezugnehmend auf die Figuren der begleitenden Zeichnungen erläutert werden.
- Fig. 1: zeigt eine schematische Ansicht einer digitalen integrierten Steuerschaltung (Controller), an die ein Lastkreis angeschlossen ist, der Leuchtmittel enthält,
- Fig. 2: zeigt Signalverläufe für den Fall, dass ein den Halbbrückenstrom wiedergebende Signal am Eingang des Controllers anliegt,
- Fig. 3: zeigt Signalverläufe für den Fall, dass ein Signal anliegt, das den Lampenstrom wiedergibt,
- Fig. 4: schließlich zeigt eine schematische Ansicht der Auswertezweige im Controller,
- Fig. 5: zeigt eine verallgemeinerte Darstellung der Erfindung, gemäss der ein Rückführsignal parallel unterschiedlichen Kriteriensätzen unterworfen wird, bevor es dem Regelalgorithmus als Istwert zugeführt wird,
- Figur 6: zeigt die Anwendung der Erfindung auf die Ansteuerung von Leuchtdioden (LEDs), wobei wiederum ein Rückführsignal unterschiedlichen Kriteriensätzen parallel unterzogen wird, bevor es dem Regelalgorithmus als Istwert zugeführt wird,
- Figur 7: zeigt eine Erläuterung der Signaldekodierung und Auswertung des Rückführsignals von Figur 7, und
- Figur 8: zeigt die Anwendung der vorliegenden Erfindung auf ein Rückführsignal einer PFC-Schaltung eines Betriebsgeräts für Leuchtmittel, wobei dieses Rückführsignal wiederum gemäß vorgegebenen Kriterien dekodiert und ausgewertet wird und parallele Auswertungszweige vorliegen.

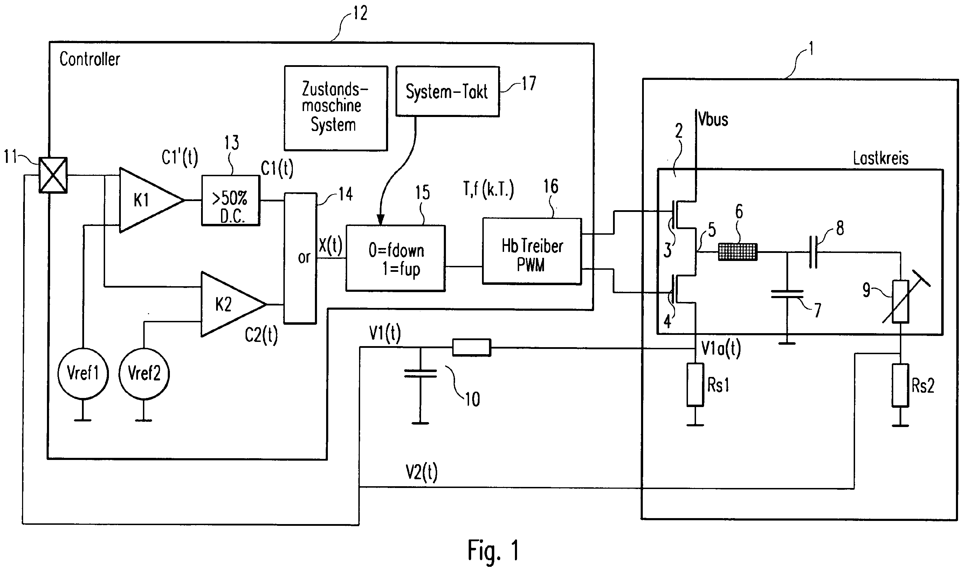

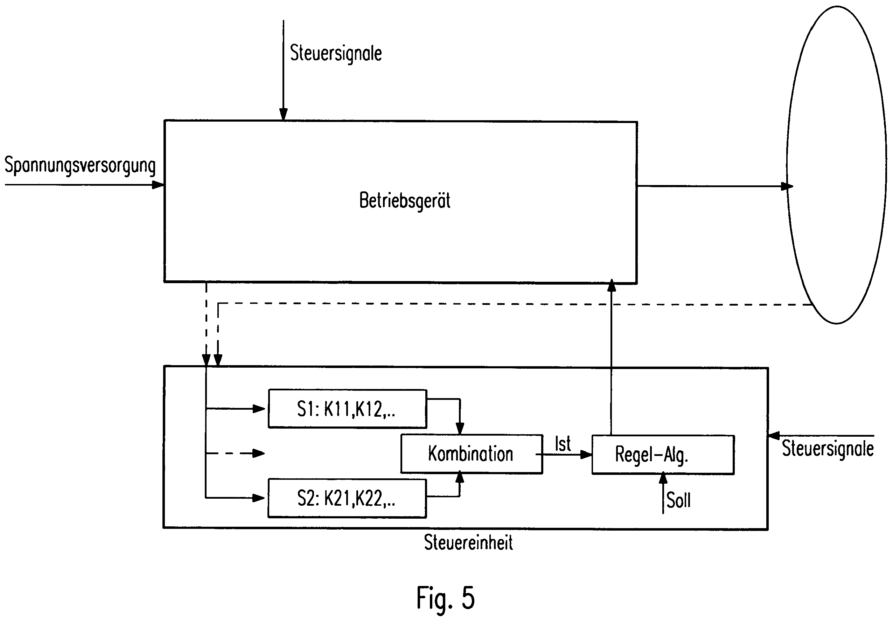

Die Erfindung soll nunmehr bezugnehmend auf Figur 5 erläutert werden, bevor beispielhafte Ausgestaltungen unter Bezugnahme auf die Figuren 1 bis 4 erläutert werden.

In Figur 5 ist allgemein ein mit Spannung versorgte Betriebsgerät gezeigt, das angeschlossene Leuchtmittel kontrolliert mit Leistung versorgt und selbst mit Spannung versorgt ist. Eine Steuereinheit ist separat herausgezeichnet, obwohl sie natürlich üblicherweise in das Betriebsgerät integriert ist. Die Steuereinheit erhält an wenigstens einem Eingang ein Messsignal von dem Betriebsgerät und/oder den Leuchtmittel zugeführt. Die Steuereinheit weist ein Regelmodul auf, d.h. ein Modul, das ausgehend von einem zugeführten Istwertsignal und einem Sollwert einen Steuerwert anhand eines Regelalgorithmus ermittelt und diesen Steuerwert an das Betriebsgerät ausgibt, so dass dieses entsprechend den Betrieb der Leuchtmittel ausführt.

Dem Betriebsgerät und insbesondere der Steuereinheit können ggf. auch externe Signale, bspw. zur Sollwerteinstellung zugeführt werden.

Gemäss der Erfindung liegt in dem Betriebsgerät und insbesondere in der Steuereinheit keine A-priori-Information vor, die angibt welcher Signaltyp tatsächlich an dem Istwerteingang anliegt. Die Steuereinheit ist erfindungsgemäss dazu ausgebildet auch ohne vorherige Konfiguration den Signaltyp selbstständig zu ermitteln. Erfindungsgemäss ist zur Signaltypermittlung auch keine "Identifizierungs-Präambel" in dem Signal notwendig, sondern die Signalinformation selbst wird neben der eigentlichen Istwert-Auswertung auch zur "Decodierung" des Signaltyps verwendet.

Dazu ist bspw. wie in Figur 5 dargestellt vorgesehen, das das Messsignal wenigstens zwei parallelen Auswertungszweigen zugeführt wird. Jeder Auswertungszweig verfügt über einen Satz S1, S2 unterschiedlicher Kriterien K11, K12 bzw. K21, K22. Das Signal wird also somit parallel unterschiedlichen Kriteriensätzen unterworfen.

Kriterien können bspw. sein:
- Amplitude,
- Tastverhältnis in einer definierten Periode,
- Frequenzanteile, etc.

Vorab wird festgelegt, welche Signaltypen für eine derartige Steuereinheit-Plattform zulässig sind. Die Signaltypen unterscheiden sich bspw. in der Art ihres Abgriffs in dem Betriebsgerät oder an den Leuchtmitteln. Für jeden zulässigen Signaltyp wird ein Auswertungszweig bereitgestellt, der mit einem für diesen Signaltyp eindeutigen Kriteriensatz versehen wird. Jeder Kriteriensatz weist ein oder vorzugsweise mehrere Kriterien auf. Die Anzahl der Kriterien kann sich von Auswertungszweig zu Auswertungszweig unterscheiden oder gleich sein.

Jeder Kriteriensatz ist für einen Signaltyp eindeutig in dem Sinne, dass bei Anliegen dieses Signaltyps nur ein Auswertungszweig einen (sich zeitlich verändernden) Beitrag als Istwertsignal liefert, während vorzugsweise alle anderen Auswertungszweige keinen bzw. einen zeitlich konstanten Beitrag liefern.

Bei Änderung des am Eingang anliegenden Signaltyps stellt sich somit die Regelung instantan und ohne Umkonfigurierung um, indem dann automatisch ein anderer Auswertungszweig den für die Regelung massgeblichen zeitlich verändernden Beitrag liefert.

In Fig. 1 ist schematisch mit dem Bezugszeichen 1 ein Lastkreis bezeichnet. Diesem Lastkreis 1 wird eine im wesentlichen konstante (optional auf einen Sollwert geregelte) Zwischenkreisspannung (Busspannung) V_{bus} zugeführt, wobei diese Busspannung eine DC-Spannung ist. Genauer gesagt wird diese Busspannung einer Halbbrückenschaltung zugeführt, die schematisch mit dem Bezugszeichen 2 bezeichnet ist und die zwei wechselseitig getaktete Schalter 3, 4 aufweist. Vorzugsweise sind diese Schalter 3, 4 MOSFETs.

An dem Mittenpunkt 5 der Halbbrückenschaltung 2 ist der eigentliche Lastkreis angekoppelt, wobei der Lastkreis eine Serienresonanzschaltung bestehend aus einer Drossel 6 und einem Kondensator 7 sowie einem Koppelkondensator 8 aufweist.

Parallel zu dem Resonanzkondensator 7 sind Leuchtmittel 9 angeschlossen, die beispielsweise eine Gasentladungslampe, eine oder mehrere Hochdrucklampen oder Leuchtdioden sein können. Wie in der Figur 1 schematisch dargestellt können diese Leuchtmittel insbesondere eine frequenzabhängige Kennlinie aufweisen. Daher kann die Frequenz der Versorgungsspannung für die Leuchtmittel 9, die die Halbbrückenschaltung ausgehend von der DC-Busspannung erzeugt, zur Einstellung der Leistung der Leuchtmittel 9 dienen.

Wenn die Leuchtmittel nicht diese frequenzabhängige Kennlinie aufweisen, wie es bspw. bei LEDs der Fall ist, kann die Leistungssteuerung auch über Einstellung des Tastverhältnisses erfolgen (PWM-Modulation).

In Figur 1 sind zwei Möglichkeiten dargestellt, wie nunmehr die Leistung der Leuchtmittel 9 indirekt oder direkt erfasst werden kann. Es wird dazu ein Parameter zurückgeführt, der direkt oder indirekt die Leuchtmittelleistung wiedergibt.

Die erste Möglichkeit ist der Abgriff eines Signals V1A (t) an einem Messwiderstand (Shunt) RS1, der vorzugsweise zwischen dem potentialniedrigeren Schalter 4 der Halbbrückenschaltung 2 und Masse geschaltet ist. Dieses Signal gibt indirekt die Leistung der Leuchtmittel 9 wieder, da ja die Busspannung im wesentlichen konstant ist. Die Leistungsinformation dieses Signals V1a(t) liegt in seinem zeitlichen Mittelwert, so dass eine interne oder externe (bezüglich des Controllers) Tiefpassschaltung 10 vorgesehen ist, wobei das tiefpassgefilterte Halbbrückenstromsignal mit V1(t) bezeichnet wird.

Eine alternative Erfassung der Leistung der Leuchtmittel 9 liegt in der Erfassung des Stroms durch die Leuchtmittel 9 mittels eines Messwiderstands (Shunt) Rs2, der bevorzugt zwischen der potentialenniedrigeren Seite Leuchtmittel 9 und Masse geschaltet ist.

Dieses Signal wird im folgenden V2(t) bezeichnet.

Im tatsächlichen Regelungsbetrieb wird natürlich nur eines der beiden Signale V1(t) oder V2(t) als Istwert für die Lampenleistung verwendet.

Der Controller soll aber nunmehr in der Lage sein, ohne externe Konfiguration (Anlegen von externen Konfigurierungswiderständen, Ablegen eines Werts in einem nichtvolatilen Speicher etc.) automatisch die korrekte Regelung der Leuchtmittelleistung durchzuführen, unabhängig welches der beiden Signale V1(t) oder V2(t) demselben Eingang 11 des Controllers 12 zugeführt wird.

Da der Controller 12 vorzugsweise als ASIC oder Microcontroller ausgeführt ist, allgemein also als integrierte digitale Steuerschaltung, kann derselbe Controller 12 als Plattform in unterschiedlichen Geräten Verwendung finden, d.h. insbesondere Geräten, die eine beliebige der beiden oben angeführten Ist-Signalrückführungen hat.

Im tatsächlichen Gerät kann entweder nur einer der beiden Rückführzweige von V1(t) oder V2(t) hardwaremäßig vorgesehen sein. Alternativ können beide hardwaremäßig vorgesehen sein, wobei indessen eine der Zweige inaktiv geschaltet ist, beispielsweise durch Unterbrechung durch Herausnahme eines Ohmschen Widerstands.

Der Controller 12 ist nunmehr also erfindungsgemäß derart ausgestaltet, dass er unabhängig von der Art des tatsächlich zurückgeführten Istwertsignals zu dem Eingang 11 des Controllers 12 automatisch die richtige Leistungseinstellung für die Leuchtmittel 9 möglichst nahe an einen Sollwert ausführt, indem er entsprechend die Frequenz und/oder das Tastverhältnis der Schalter der Halbbrücke einstellt. Dabei ist wie gesagt zu berücksichtigen, dass diese beiden Signalarten die Leistungsinformation unterschiedlich codiert haben, nämlich einerseits in zeitlichem Mittelwert im Falle des Halbbrückenstroms und andererseits in Form des Spitzenwertbereichs im Fall des Leuchtmittelstroms.

Wie in Figur 1 ersichtlich sind erfindungsgemäß in dem Controller 12 zwei Auswertezweige mit dem Eingang 11 verbunden.

Der erste Auswertungszweig, der für die korrekte Auswertung des intern oder extern tiefpassgefilterten Halbbrückenstromsignals V1(t) zuständig ist, weist einen Komparator K1 sowie eine Tastverhältnisauswerteschaltung 13 auf. Dem Komparator K1 wird dabei einerseits das dem Eingang 11 des Controllers 12 zugeführte Signal zugeführt, das wie gesagt wahlweise das Signal V1(t) oder V2(t) sein kann. Weiterhin wird ihm eine Referenzspannung V_{ref1} zugeführt.

Die Tastverhältnis-Auswerteeinheit 13 gibt ein Logiksignal (beispielsweise 0 oder 1) aus, dessen Wert davon abhängt, ob das Tastverhältnis des Ausgangssignals des Komparators K1 größer oder kleiner als 50% ist.

Der zweite Auswertezweig weist einen Komparator K2 auf, dem wiederum das an den Eingang 11 anliegende Eingangssignal des Controllers 12 sowie eine Referenzspannung V_{ref2} zugeführt werden. Vorzugsweise ist die Referenzspannung des zweiten Komparators K2 unterschiedlich zu der Referenzspannung V_{ref1} des ersten Komparators K1.

Die Ausgangssignale der beiden Auswertezweige sind über ein Logik-Glied verbunden, das beispielsweise ein ODER-Glied 14 sein kann. In der Ausführungsform von Figur 1 wird also einerseits das logische Ausgangssignal der Tastverhältnis-Auswerteeinheit 13 einerseits und andererseits das Ausgangssignal des Komparators K2 dem Logik-Glied 14 zugeführt.

Das zeitabhängige Ausgangssignal des Logik-Glieds 14 wird nunmehr mit X(t) bezeichnet und wird einer Einheit 15 zugeführt, die den Logik-Ausgangswert des Logikglieds 14 in eine Frequenzvorgabe und/ Tastverhältnisvorgabe für einen Halbbrückentreiber 16 umsetzt, der wiederum die Schalter 3, 4 der Halbbrücke 2 ansteuert.

Vorzugsweise gibt die Frequenzumsetzereinheit 15 die Information "Erhöhe Frequenz" bei einem ersten Logikzustand des Signals X(t) aus, während in dem jeweils anderen logischen Zustand des Signals X(t) das Signal "Erniedrige die Frequenz der Halbbrücke" an den Halbbrückentreiber 16 ausgegeben wird. Vorzugsweise ist diese Information für die Halbbrückentreiber die Ansteuerung einer inkrementellen Erhöhung oder Erniedrigung der Halbbrücken-Betriebsfrequenz.

Beispielsweise kann somit diese Frequenzumsetzereinheit 15 als Zähler ausgeführt sein. Dieser Zähler integriert während einer Schaltperiode des Halbbrückentreibers 16 das anliegende Eingangssignal X(t), so dass der Zählerwert also bei einem anliegenden Eingangssignal "1" laufend inkrementell erhöht wird ("laufend" bedeutet dabei mit der Frequenz des Systemtakts 17), während bei einem anliegenden Signal "logisch null" der Zählerstand erniedrigt wird. Jeweils nach einer Periode des Halbbrückentreibers 16 wird dann der Zähler neu initialisiert. Abhängig davon ist am Ende einer Periode des Halbbrückentreibers festzustellen, ob der Wert des Zählers über oder unter dem Initialwert (der nicht null sein muss) liegt.

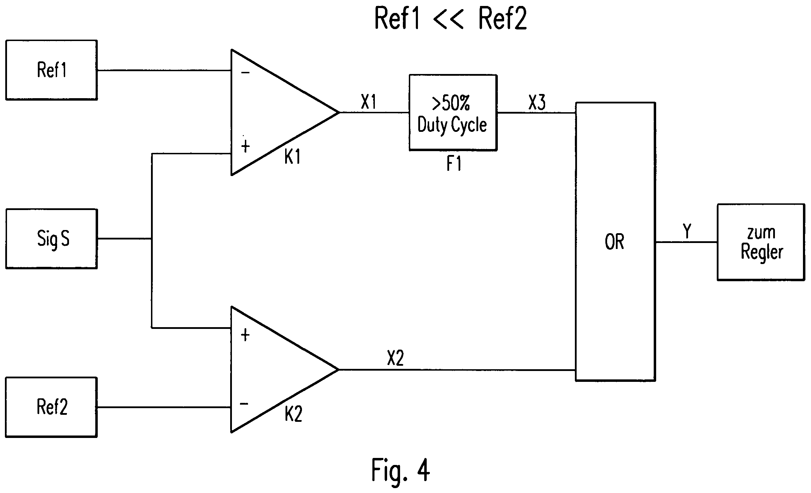

Figur 4 zeigt detailliert die Verschaltung der Komparatoren K1, K2 sowie die Anordnung des ersten und zweiten Auswertungszweigs. Es sei noch einmal betont, dass die invertierten Eingänge der Komparatoren K1, K2 anliegenden Referenzspannungen vorzugsweise unter V_{ref1}, V_{ref2} vorzugsweise unterschiedlich sind und vorzugsweise V_{ref2} größer ist als V_{ref1}.

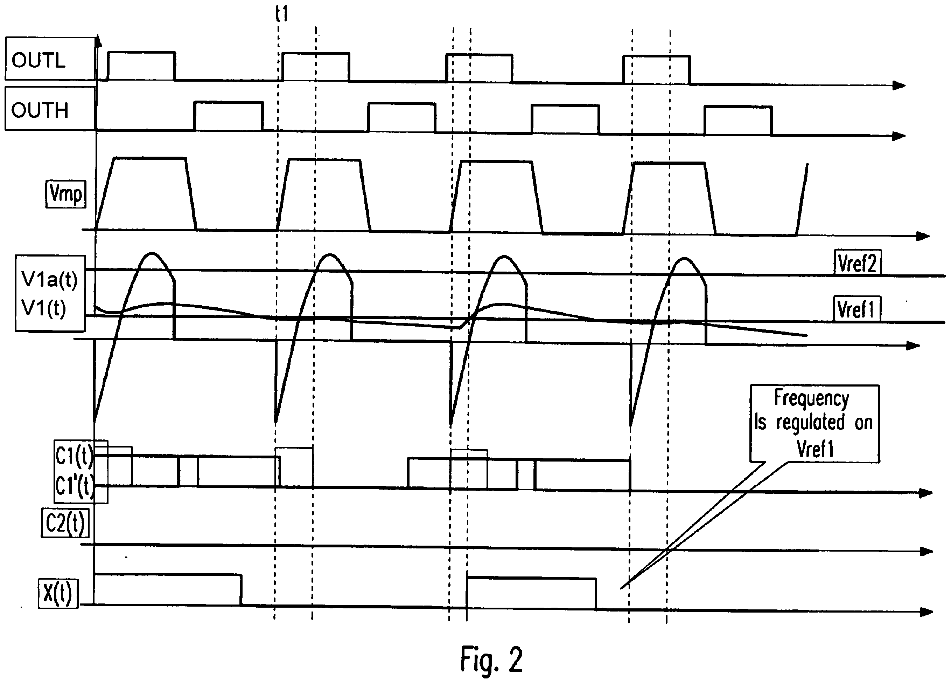

Bezugnehmend auf Figur 2 soll nunmehr das Szenario erläutert werden, das am Eingang 11 des Controllers 12 das Signal V1(t) anliegt, d.h. ein Halbbrückenstromsignal.

Die Signale OutH und OutL bezeichnen die Gate-Ansteuersignale des potentialhöheren (OutH) Schalters 3 bzw. des potentialniedrigeren (OutL) Schalters 4. Nach dem wechselseitigen Einschalten des Schalters 3 und dann des Schalters 4 ist eine Periode des Schaltvorgangs der Halbbrücke 2 beendet, was schematisch mit dem Zeitpunkt t1 bezeichnet ist. V_{MP} bezeichnet die Mittenpunktspannung, d.h. die Spannung am Mittenpunkt 5, an der der Lastkreis angeschlossen ist.

Weiterhin ist in Figur 2 ersichtlich, dass die Referenzspannung Vref2 über der von Vref1 liegt.

Das intern oder extern gefilterte Mittelwertsignal V1(t) kann durch entsprechende Wahl der Vergleichsspannungen Vref1 bzw. Vref2 zwar, abhängig von der aktuellen Leuchtmittelleistung, den Schwellenwert Vref2 unterschreiten oder überschreiten. Dagegen wird es stets unterhalb der Referenzschwelle Vref2 des zweiten Komparators K2 sein. Dementsprechend ist der Ausgang des Komparators K2, d.h. das Signal C2(t) stets null. Dieses Signal ändert sich also für den Fall der Erfassung des Halbbrückenstroms V1(t) über die gesamte Betriebszeitdauer nicht.

Dagegen ist die Referenzspannung Vref1 so gewählt, dass bei eingeschaltetem Schalter 4 (siehe Signal OutL) das Signal V1a(t) über dem Schwellenwert Vref1 liegt, während es bei eingeschaltetem Schalter 3 (Signal OutH) darunterliegt. Aufgrund des Anschaltens der Ansteuerung des Schalters 3, 4 mit einem Tastverhältnis von 50% wird somit das Signal V1(t) etwa 50% der Schaltperiode t1 über dem Schwellwert Vref1 und entsprechend 50% darunterliegen.

Wenn indessen die Lampenleistung über dem durch die Referenzspannung Vref1 liegenden Sollwert liegt, wird das Tastverhältnis des Signals V1(t) über 50% liegen, was bedeutet, dass dann der Ausgang der Tastverhältnis-Auswerteeinheit 13 auf logisch Hoch geht, wodurch auch der Ausgang des ODER-Glieds auf Hoch (oder 1) geht. Dementsprechend wird dann der Halbbrückentreiber zu einer inkrementellen Erhöhung der Betriebsfrequenz der Halbbrücke 2 angesteuert. Aufgrund des Betriebs der Leuchtmittel im kapazitiven Bereich bedeutet dies einen Betriebspunkt der Leuchtmittel weiter weg vom Resonanzpeak, was eine Leistungserniedrigung bewirkt.

Wenn dagegen im zeitlichen Mittel, gemessen über eine Schaltperiode T1, das Signal V1(t) mehr als 50% unter der

Referenzspannung Vref1 liegt, wird die Frequenz der Halbbrücke erniedrigt, wodurch sich die Leistung der Leuchtmittel 9 bei Betrieb auf dem kapazitiven Ast der Resonanzkurve erhöht.

Nochmals sei betont, dass die Referenzspannung Vref1 den Leistungssollwert für die Leuchtmittel 9 bei Erfassung des Halbbrückenstroms vorgibt. Dementsprechend gibt die Spannung Vref2 den Leistungssollwert bei Erfassung (Rückführung als Istwert) des Lampenstroms vor.

Die Spannungen Vref1 oder Vref2 können fest ("fixed output") vorgegeben sein. Sie können aber auch beispielsweise von außen im Sinne von Dimmsignalen einstellbar sein, wodurch sich ein Dimmbetrieb ergibt.

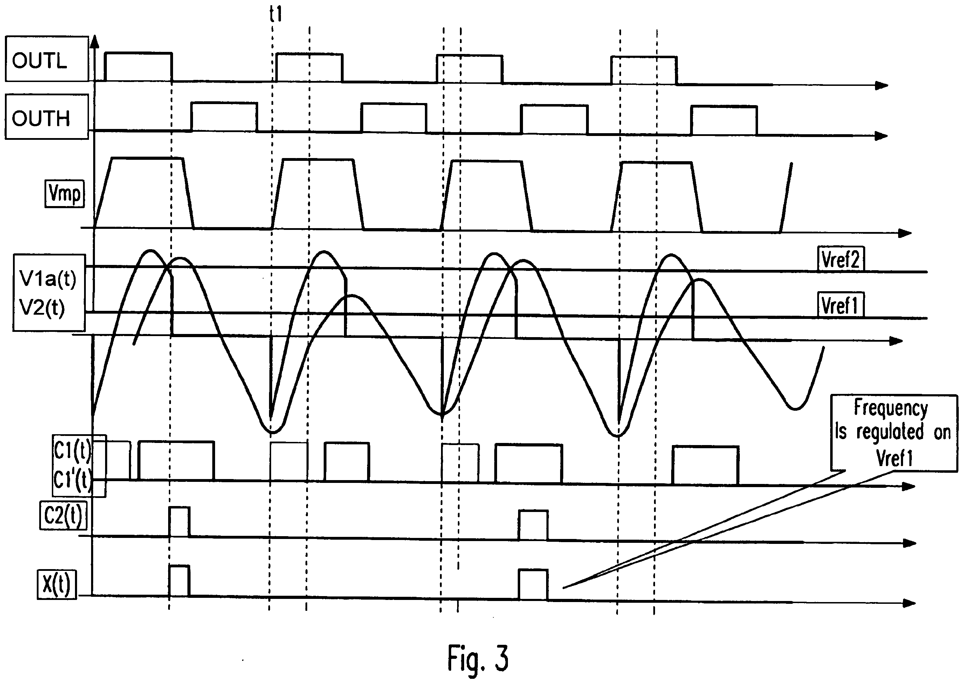

Wie in Fig. 3 ersichtlich wird bei Rückführung eines Lampenstromsignals (das zeitlich nicht gemittelt oder tiefpassgefiltert ist) das Tastverhältnis des Vergleichs dieses Rückführsignals mit der Referenzspannung Vref1 immer unter 50% sein, so dass in diesem Fall die Tastwert-Auswerteeinheit 13 konstant ein Signal C1(t) = 0 ausgibt. Somit trägt dieser erste Auswertezweig bei der Erfassung des Leuchtmittelstroms keinen Beitrag zur Regelung bei, während im Fall der Erfassung des Halbbrückenstroms der zweite Auswertezweig keinen Beitrag liefert.

Die Erhöhung bzw. Erniedrigung der Betriebsfrequenz der Halbbrücke 2 hängt nunmehr allein davon ab, wie lange der Scheitelbereich des Stromsignals durch die Leuchtmittel über den Schwellenwert Vref2 liegt.

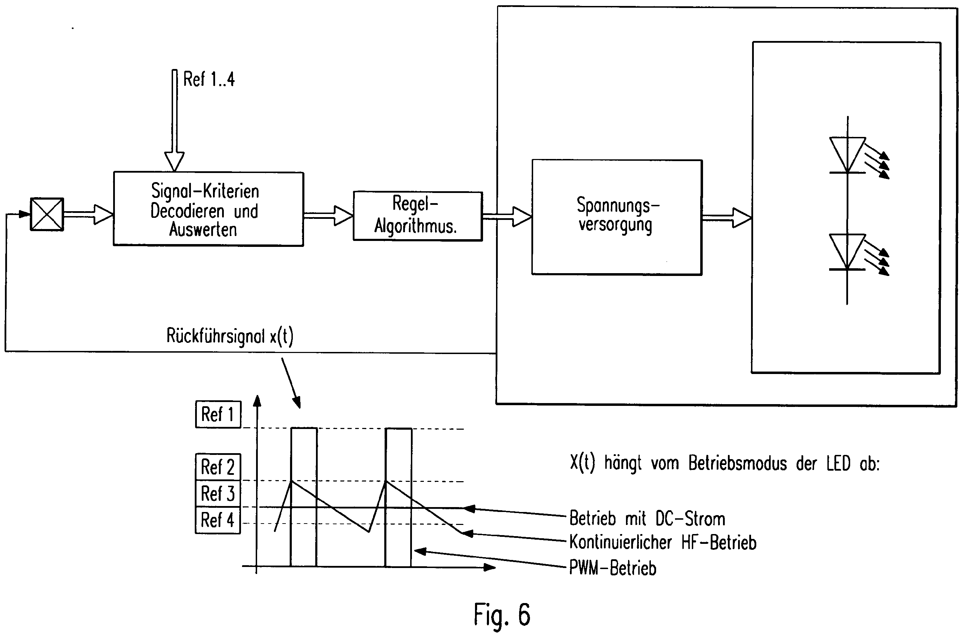

Bezug nehmend auf Figur 6 soll nunmehr eine Anwendung der Erfindung auf die geregelte Versorgung von Leuchtdioden (LEDs) mit Spannung und/oder Strom erläutert werden.

Aus dem Lastkreis, der die Leuchtdioden umfasst, wird wiederum an einem Eingang der Steuerschaltung ein Rückführsignal angelegt. Das Rückführsignal wird wiederum gemäß vorgegebener Signalkriterien, hier Schwellenwerte (Referenzwerte (Ref1, Ref2, Ref3, Ref4)) 'dekodiert' und ausgewertet, bevor es als Istwertsignal einem Regelmodul zugeführt wird, das einen Regelalgorithmus implementiert. Abhängig von dem zugeführten Istwertsignal und einem Sollwert gibt das Regelmodul dann ein Steuersignal an eine schematisch dargestellte Spannungs-/Stromversorgungseinheit für die Leuchtdioden aus.

Der Plattformgedanke bei dieser Anwendung liegt nunmehr darin, dass die Steuereinheit für unterschiedliche Betriebsmodi der LEDs verwendbar sein soll, ohne dass der Steuereinheit apriori-Information über die konkret implementierte Betriebsweise für die LEDs zugeführt wird.

Die vorliegenden Betriebsmodi für die LEDs können beispielsweise vorgesehen sein:
- Betrieb mit DC-Strom
- Kontinuierlicher HF-Betrieb
- PWM-Betrieb.

Wie in Figur 6 schematisch dargestellt, wird das Rückführsignal x(t), das beispielsweise den Diodenstrom wiedergeben kann, einen unterschiedlichen Verlauf abhängig davon einnehmen, welche der drei oben geschilderten zulässigen Betriebsarten für die LEDs tatsächlich implementiert ist.

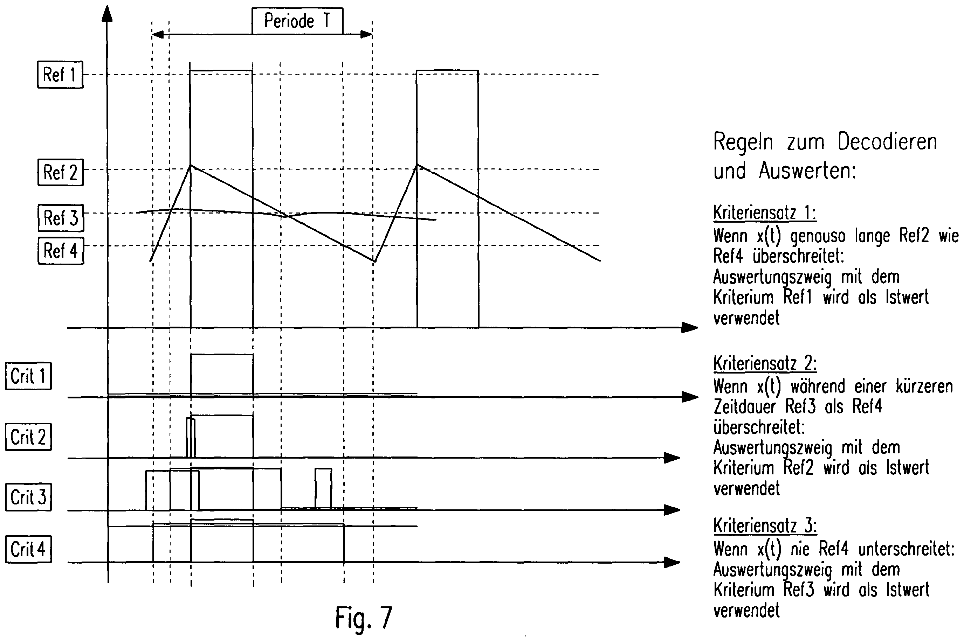

Die Auswertungskriterien in diesem Beispiel, siehe auch Figur 7, sind durch die unterschiedlichen Schwellenwerte (Referenzwerte (Refl-Ref4)) definiert. Genauer gesagt, siehe Figur 7, wird ausgewertet, ob bzw. wie lange das Rückführsignal x(t) bestimmte Schwellenwerte über- bzw. unterschreitet. Diese Auswertung wird jeweils innerhalb einer Periode T der Schaltansteuerung eines Schalters in der Spannungs-/Stromversorgungseinheit für die Leuchtdioden ausgeführt.

In Figur 7 sind drei verschiedene Auswertungskriteriensätze vorgegeben, was also drei parallelen Auswertungszweigen entspricht.

Wenn x(t) genau so lange den Schwellenwert Ref2 wie den Schwellenwert R4 überschreitet, wird darauf geschlossen, dass ein PWM-Betrieb am Ausgang des Regelmoduls angeschlossen ist und dementsprechend wird der Schwellenwert Ref1 angewandt, d.h. es wird ein Auswertungszweig als Istwertsignalrückführung verwendet, indem das Rückführsignal x(t), immer auf eine Schalterperiode T bezogen, mit dem Schwellenwert Ref 1 verglichen wird.

Wenn das Rückführsignal x(t) den Schwellenwert Ref3 während einer kürzeren Zeitdauer als den Schwellenwert Ref4 überschreitet, wird darauf geschlossen, dass ein kontinuierlicher HF-Betrieb der Leuchtdioden implementiert ist. In diesem Fall wird der Auswertungszweig zur Istwertsignalrückführung verwendet, der das Rückführsignal x(t) mit dem Schwellenwert Ref2 vergleicht.

Ein dritter Kriteriensatz überprüft, ob das Rückführsignal x(t) in der Schalterperiode T nie den Schwellenwert Ref4 unterschreitet. Falls dies der Fall ist, wird auf das Vorliegen eines Betriebs der LEDs mit DC-Strom geschlossen. In diesem Fall wird ein Auswertungszweig zur Istwertsignalrückführung verwendet, der das Rückführsignal x(t) mit dem Schwellenwert Ref3 vergleicht.

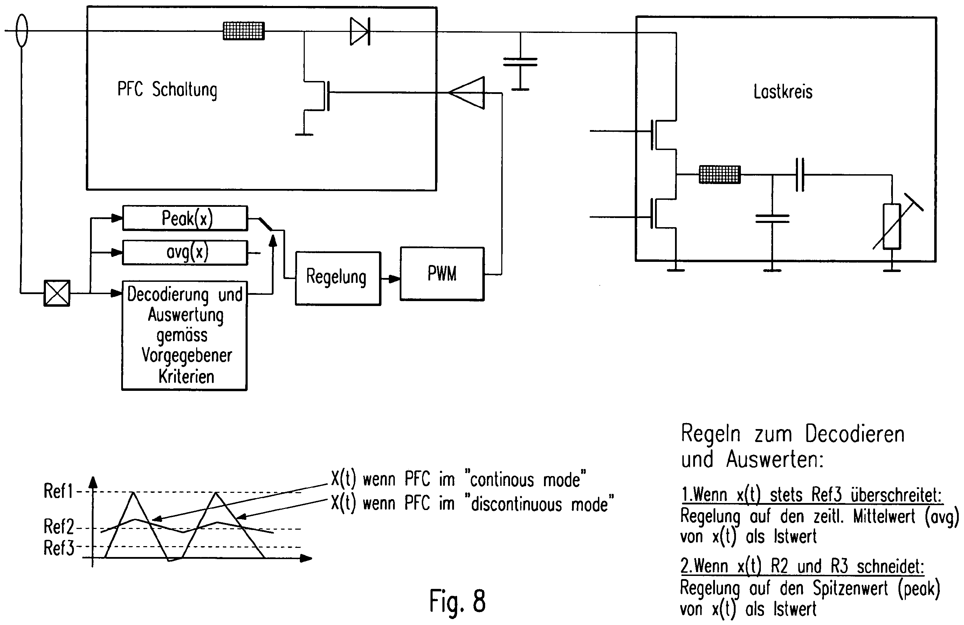

Bezug nehmend auf Figur 8 soll nunmehr erläutert werden, dass die vorliegende Erfindung nicht nur auf die Lastkreisregelung, sondern auch auf Rückführsignale in anderen Bereichen eines Betriebsgeräts für Leuchtmittel zur Anwendung kommen kann. Im in Figur 8 dargestellten Beispiel ist das Rückführsignal ein Stromsignal einer PFC-Schaltung, die mit Gleichspannung versorgt ist und einen in Serie geschaltete Induktivität und eine Diode aufweist, wobei abhängig von einer Ansteuerung eines Schalters die Induktivität aufmagnetisiert bzw. entmagnetisiert wird. Ausgangsseitig ist ein Speicherkondensator vorgesehen. Mit der durch den Speicherkondensator stabilisierten DC-Spannung kann dann wie dargestellt ein Lastkreis versorgt werden, der beispielsweise eine Halbbrückenschaltung aufweisen kann, dessen Mittenpunkt ein Serienresonanzkreis mit den Leuchtmitteln angeschlossen sein kann, wobei die Leuchtmittel schematisch als variabler Widerstand dargestellt sind.

Im Sinne eines Plattform-Gedankens soll die Steuer- und/oder Regeleinheit gemäß der Erfindung nunmehr für unterschiedliche Betriebsarten der PFC-Schaltung verwendbar sein, und zwar wiederum, ohne dass der Steuerschaltung vorab eine Konfigurierungsinformation bezüglich der konkreten Betriebsweise der PFC-Schaltung zugeführt wird.

Die beiden grundsätzlich möglichen Betriebsweisen der PFC-Schaltung sind in diesem Beispiel:
'Continuous mode' des PFC, d.h., der Schalter wird wieder eingeschaltet, bevor die Spule völlig entmagnetisiert ist, so dass der Strom durch die Spule nie auf Null abfällt.

'Discontinuous mode' des PFC, d.h., es wird abgewartet, bis der Spulenstrom auf Null und ggf. sogar leicht darunter auf einen Minimalwert abgesunken ist, bevor der Schalter wieder eingeschaltet wird. Der sogenannte 'borderline mode' kann unter diesen 'discontinuous mode' insofern subsummiert werden, als beim 'borderline mode' unmittelbar bei Erreichen der Nulllinie durch den Spulenstrom der Schalter wieder eingeschaltet wird.

Die Steuerschaltung gemäß der vorliegenden Erfindung ist nunmehr in der Lage, anhand des Rückführsignals (hier: Strom durch die Spule der PFC-Schaltung) zu ermitteln, welche Betriebsweise der PFC-Schaltung tatsächlich anliegt.

Dazu wird einerseits ermittelt, ob das Rückführsignal x(t) stets einen Schwellenwert Ref3 überschreitet:

In diesem Fall wird auf das Vorliegen des 'continuous mode' geschlossen und es wird der zeitliche Mittelwert des Rückführsignals x(t) dem Regelungsmodul als Istwert zugeführt.

Wenn dagegen das Rückführsignal x(t) zeitweise sowohl die Schwellenwerte Ref2 und Ref3 über- bzw. unterschreitet, wird auf das Vorliegen eines Betriebs der PFC-Schaltung im 'discontinuous mode' geschlossen, in welchem Fall der Spitzenwert (peak) des Rückführsignals x(t) dem Regelungsmodul als Istwert zugeführt wird.

## Patentansprüche

1. Steuerschaltung für ein Betriebsgerät für Leuchtmittel (9), wobei die Steuerschaltung aufweist:
- einen Ausgang zur Ausgabe eines Steuersignals für den Leuchtmittelbetrieb zur Taktung von Schaltern einer Halbbrückenschaltung; und
- einen Eingang (11) für ein Signal;
**gekennzeichnet dadurch, dass** die Steuerschaltung ferner aufweist:
- wenigstens zwei parallele Auswertungszweige, mit denen der Eingang (11) verbunden ist, wobei jeder der wenigstens zwei Auswertungszweige jeweils einen Komparator (K1, K2) aufweist, wobei jeder Komparator (K1, K2) zum Zuführen einer Referenzspannung (Vref1/Vref2) und eines an dem Eingang (11) anliegendes Signal ausgestaltet ist, wobei die Referenzspannungen (Vref1, Vref2), die den Komparatoren (K1, K2) zugeführt werden, unterschiedlich sind und das Signal, das an dem Eingang (11) anliegt und den Komparatoren (K1, K2) zugeführt wird, dasselbe Signal ist und ferner wahlweise einen Halbbrückenstrom oder den Strom durch die Leuchtmittel (9) wiedergibt;
- ein Regelmodul; und
- ein Logikglied, das ausgestaltet ist, Ausgänge der wenigstens zwei Auswertungszweige mit einem Logikglied zusammenzuführen;
wobei:
- die wenigstens zwei parallelen Auswertungszweige ausgestaltet sind, ihre Ausgänge dem Regelmodul als Istwertsignal zuzuführen;
- das Regelmodul ausgestaltet ist, anhand des Istwertsignals und eines Sollwerts einen Steuerwert zu ermitteln und an dem Ausgang der Steuerschaltung als Stellsignal auszugeben, wobei das Stellsignal abhängig von dem logischen Ausgangswert des Logikglieds veränderbar ist;
- ein erster Auswertungszweig der wenigstens zwei parallelen Auswertungszweige derart ausgelegt ist, dass, wenn das Signal, das an dem Eingang (11) anliegt, den Halbbrückenstrom wiedergibt (V1(t)), der Ausgang des ersten Auswertungszweigs ausgestaltet ist, zwei verschiedene Logikzustände anzunehmen, und dass, wenn das Signal, das an dem Eingang (11) anliegt, den Strom durch die Leuchtmittel (9) wiedergibt (V2(t)), der Ausgang des ersten Auswertungszweigs ausgestaltet ist, nur einen konstanten Logikwert einzunehmen; und
- ein zweiter Auswertungszweig der wenigstens zwei parallelen Auswertungszweige derart ausgelegt ist, dass, wenn das Signal (V2(t)), das an dem Eingang (11) anliegt, den Strom durch die Leuchtmittel (9) wiedergibt (V2(t)), der Ausgang des zweiten Auswertzweigs ausgestaltet ist, zwei verschiedene Logikzustände einzunehmen, und, wenn das Signal (V1(t)), das an dem Eingang (11) anliegt, den Halbbrückenstrom wiedergibt (V1(t)), der Ausgang des zweiten Auswertzweigs ausgestaltet ist, nur einen konstanten Logikwert einzunehmen.

2. Steuerschaltung nach Anspruch 1, wobei jeder der mehreren parallelen Auswertungszweige dazu ausgelegt ist, eine Auswertung des Signals anhand unterschiedlicher Sätze (S1, S2) an Kriterien (K11, K12; K21, K22) auszuführen.

3. Steuerschaltung nach Anspruch 2, wobei die Kriterien (K11, K12; K21, K22) ausgewählt sind aus:
- Amplitude,
- Tastverhältnis in einer definierten Periode,
- Frequenzanteile, und/oder
- Zeitdauer des Unterschreitens/Überschreitens wenigstens eines Schwellenwerts.

4. Steuerschaltung nach einem der vorhergehenden Ansprüche, wobei die Kriteriensätze (S1, S2) dabei derart ausgewählt sind, dass für jeden zulässigen Signaltyp für den Eingang (11) nur ein Kriteriensatz (S1, S2) erfüllt ist, so dass nur ein Auswertungszweig einen zeitlich verändernden Beitrag zu dem Istwertsignal für das Regelmodul liefert, während die anderen Auswertungszweige keinen oder einen zeitlich konstanten Beitrag liefern.

5. Steuerschaltung nach einem der vorhergehenden Ansprüche, bei dem das Steuersignal zur Ein/Aus-Ansteuerung eines Schalters (3, 4) des Betriebsgeräts ausgelegt ist.

6. Steuerschaltung nach Anspruch 5, bei dem das Steuersignal zur Ansteuerung eines Schalters (3, 4) eines PFCs, eines Schaltreglers oder eines Wechselrichters (2) des Betriebsgeräts ausgelegt ist.

7. Steuerschaltung nach einem der vorliegenden Ansprüche, wobei in der Steuerschaltung keine a-priori-Information über den am Eingang (11) anliegenden Signaltyp vorliegt.

8. Steuerschaltung nach einem der vorhergehenden Ansprüche, die dazu ausgelegt ist, den anliegenden Signaltyp adaptiv und instantan zu ermitteln.

9. Steuerschaltung nach Anspruch 1, bei der das Logikglied ein ODER-Glied ist.

10. Steuerschaltung nach einem der vorhergehenden Ansprüche, die als ASIC und/oder Microcontroller (12) ausgeführt ist.

11. Steuerschaltung nach Anspruch 1, bei dem das den Halbbrückenstrom wiedergebende Signal (V1(t)) extern oder in der Steuerschaltung tiefpassgefiltert ist.

12. Steuerschaltung nach einem der vorhergehenden Ansprüche, bei dem der erste Auswertungszweig einen Komparator (K1) aufweist, dessen Ausgang mit einer Tastverhältnis-Auswerteeinheit verbunden ist.

13. Steuerschaltung nach einem der vorhergehenden Ansprüche, die dazu ausgebildet ist, abhängig von dem logischen Ausgangswert des Logikglieds die Frequenz des Halbbrücken-Ansteuersignals vorzugsweise um ein Inkrement zu erhöhen oder zu erniedrigen.

14. Betriebsgerät für Leuchtmittel (9),
insbesondere Elektronisches Vorschaltgerät für Gasentladungslampen, Hochdrucklampen oder Leuchtdioden, aufweisend eine Steuerschaltung nach Anspruch 1.

15. Leuchte, aufweisend ein Leuchtmittel (9) und ein Betriebsgerät nach Anspruch 14.

16. Verfahren für den Betrieb eines Betriebsgeräts für Leuchtmittel (9) durch Ausgabe eines Stellsignals zur Taktung von Schaltern einer Halbbrückenschaltung, wobei an einem Eingang (11) einer Steuerschaltung ein Signal zugeführt wird, wobei das Verfahren **dadurch gekennzeichnet ist, dass**:
- der Eingang (11) mit wenigstens zwei parallelen Auswertungszweigen der Steuerschaltung verbunden ist, wobei jeder der wenigstens zwei Auswertungszweige jeweils einen Komparator (K1, K2) aufweist und wobei jedem Komparator (K1, K2) eine Referenzspannung (Vref1/Vref2) und das an dem Eingang (11) anliegende Signal zugeführt wird, wobei die Referenzspannungen (Vref1, Vref2), die den Komparatoren (K1, K2) zugeführt werden, unterschiedlich sind und wobei das Signal, das an dem Eingang (11) anliegt und den Komparatoren (K1, K2) zugeführt wird, dasselbe Signal ist und ferner wahlweise einen Halbbrückenstrom oder den Strom durch die Leuchtmittel (9) wiedergibt;
- Ausgänge der wenigstens zwei Auswertungszweige mit einem Logikfeld der Steuerschaltung zusammengeführt werden;
- die Ausgänge der wenigstens zwei Auswertungszweige einem Regelmodul der Steuerschaltung als Istwertsignal zugeführt werden;
- das Regelmodul anhand dieses Istwertsignals und eines Sollwerts einen Steuerwert ermittelt und an dem Ausgang der Steuerschaltung als Stellsignal ausgibt, wobei das Stellsignal abhängig von dem logischen Ausgangswert des Logikglieds veränderbar ist;
- wenn das Signal, das an dem Eingang (11) anliegt, den Halbbrückenstrom wiedergibt (V1(t)), der Ausgang eines ersten Auswertungszweigs der wenigstens zwei Auswertungszweige zwei verschiedene Logikzustände annimmt, und, wenn das Signal, das an dem Eingang (11) anliegt, den Strom durch die Leuchtmittel (9) wiedergibt (V2(t)), der Ausgang des ersten Auswertungszweigs nur einen konstanten Logikwert annimmt; und
- wenn das Signal, das an dem Eingang (11) anliegt, den Strom durch die Leuchtmittel (9) wiedergibt, der Ausgang eines zweiten Auswertungszweigs der wenigstens zwei Auswertungszweige zwei verschiedene Logikzustände einnimmt, und, wenn das Signal, das an dem Eingang (11) anliegt, den Halbbrückenstrom wiedergibt, dass der Ausgang des zweiten Auswertungszweigs der wenigstens zwei Auswertungszweite nur einen konstanten Logikwert einnimmt.

17. Verfahren nach Anspruch 16, wobei jeder der mehreren parallelen Auswertungszweige eine Auswertung desselben Signals anhand unterschiedlicher Sätze (S1, S2) an Kriterien (K11, K12; K21, K22) ausführt.

18. Verfahren nach Anspruch 17, wobei die Kriteriensätze (S1, S2) dabei derart ausgewählt sind, dass für jeden zulässigen Signaltyp für den Eingang (11) nur ein Kriteriensatz (S1, S2) erfüllt ist, so dass nur ein Auswertungszweig einen sich zeitlich verändernden Beitrag zu dem Istwertsignal für das Regelmodul liefert, während die anderen Auswertungszweige keinen oder einen zeitlich konstanten Beitrag liefern.

19. Verfahren nach Anspruch 16 bis 18, wobei in der Steuerschaltung keine a-priori-Information über den am Eingang (11) anliegenden Signaltyp vorliegt.

20. Verfahren nach einem der Ansprüche 16 bis 19, wobei der an dem Eingang (11) anliegenden Signaltyp adaptiv und instantan ermittelt wird.

21. Verfahren nach Anspruch 20,
wobei die Kriterien (K11, K12; K21, K22) ausgewählt sind aus:
- Amplitude,
- Tastverhältnis in einer definierten Periode, und/oder
- Frequenzanteile.

## Claims

1. A control circuit for an operating device for lighting means (9), wherein the control circuit has:
- an output for the outputting of a control signal for the lighting means operation for clocking of switches of a half-bridge circuit; and
- an input (11) for a signal;
**characterized in that** the control circuit furthermore has:
- at least two parallel evaluation branches, with which the input (11) is connected, wherein each of the at least two evaluation branches in each case has a comparator (K1, K2), wherein each comparator (K1, K2) is designed for supplying a reference voltage (Vref1/Vref2) and a signal applied to the input (11), wherein the reference voltages (Vref1, Vref2), which are supplied to the comparators (K1, K2) are different and the signal, which is applied to the input (11) and is supplied to the comparators (K1, K2) is the same signal and furthermore either reflects a half-bridge current or the current through the lighting means (9);
- a control module; and
- a logic member, which is designed to combine outputs of the at least two evaluation branches with a logic member;
wherein:
- the at least two parallel evaluation branches are designed to supply their outputs to the control module as an actual value signal;
- the control module is designed, to determine a control value by means of the actual value signal and a target value and to output it as a control signal to the output of the control circuit, wherein the control signal can be changed depending on the logical output value of the logic member;
- a first evaluation branch of the at least two parallel evaluation branches is designed in such a manner that, if the signal, which is applied to the input (11), reflects (V1 (t)) the half-bridge current, the output of the first evaluation branch is designed to assume two different logical states, and that, if the signal, which is applied to the input (11) reflects (V2(t)) the current though the lighting means (9), the output of the first evaluation branch is designed to assume only a constant logical value; and
- a second evaluation branch of the at least two parallel evaluation branches is designed in such a manner that, if the signal (V2(t)), which is applied to the input (11), reflects (V2 (t)) the current through the lighting means (9), the output of the second evaluation branch is designed to assume two different logical states, and, if the signal (V1(t)), which is applied to the input (11), reflects (V1(t)) the half-bridge current, the output of the second evaluation branch is designed to assume only a constant logical value.

2. A control circuit according to Claim 1, wherein each of the plurality of parallel evaluation branches is designed to perform an evaluation of the signal by means of different sets (S1, S2) of criteria (K11, K12; K21, K22).

3. A control circuit according to Claim 2, wherein the criteria (K11, K12; K21, K22) are selected from:
- amplitude,
- duty cycle in a defined period,
- frequency components, and/or
- time duration of the falling below/exceeding of at least one threshold value.

4. A control circuit according to any one of the preceding claims, wherein the sets of criteria (S1, S2) are thereby selected in such a manner that for each permissible signal type for the input (11) only one set of criteria (S1, S2) is satisfied, so that only one evaluation branch delivers a temporally varying contribution to the actual value signal for the control module, while the other evaluation branches deliver no contribution or a temporally constant contribution.

5. A control circuit according to any one of the preceding claims, in which the control signal is designed for the on/off-controlling of a switch (3, 4) of the operating device.

6. A control circuit according to Claim 5, in which the control signal is designed for the controlling of a switch (3, 4) of a PFC, a switching regulator or an inverter (2) of the operating device.

7. A control circuit according to any one of the present claims, wherein no a-priori information about the signal type applied to the input (11) exists in the control circuit.

8. A control circuit according to any one of the preceding claims, which is designed to determine the applied signal type adaptively and instantaneously.

9. A control circuit according to Claim 1, in which the logic member is an OR member.

10. A control circuit according to any one of the preceding claims, which is designed as an ASIC and/or microcontroller (12).

11. A control circuit according to Claim 1, in which the signal (V1(t)) reflecting the half-bridge current is low-pass filtered externally or in the control circuit.

12. A control circuit according to any one of the preceding claims, in which the first evaluation branch has a comparator (K1), the output of which is connected with a duty cycle-evaluation unit.

13. A control circuit according to any one of the preceding claims, which is designed to increase or to decrease the frequency of the half-bridge control signal preferably by an increment depending on the logical evaluation value of the logic member.

14. An operating device for lighting means (9), in particular, an electronic ballast for gas discharge lamps, high-pressure lamps or light-emitting diodes, having a control circuit according to Claim 1.

15. A lamp, having a lighting means (9) and an operating device according to Claim 14.

16. A method for the operation of an operating device for lighting means (9) through output of a control signal for the clocking of switches of a half-bridge circuit, wherein a signal is supplied to an input (11) of a control circuit, wherein the method is **characterized in that**:
- an input (11) is connected with at least two parallel evaluation branches of the control circuit, wherein each of the at least two evaluation branches in each case has a comparator (K1, K2) and wherein a reference voltage (Vref1/Vref2) and the signal applied to the input (11) is supplied to each comparator (K1, K2), wherein the reference voltages (Vref1, Vref2), which are supplied to the comparators (K1, K2) are different and wherein the signal, which is applied to the input (1) and is supplied to the comparators (K1, K2) is the same signal and furthermore either reflects a half-bridge current or the current through the lighting means (9);
- outputs of the at least two evaluation branches are combined with a logic field of the control circuit;
- the outputs of the at least two evaluation branches are supplied to a control module of the control circuit as an actual value signal;
- the control module determines a control value by means of this actual value signal and a target value and outputs it as a control signal to the output of the control circuit, wherein the control signal can be changed depending on the logical output value of the logic member;
- if the signal, which is applied to the input (11) reflects (V1(t)) the half-bridge current, the output of a first evaluation branch of the at least two evaluation branches assumes two different logical states, and, if the signal, which is applied to the input (11) reflects (V2(t)) the current through the lighting means (9), the output of the first evaluation branch assumes only a constant logical value; and
- if the signal, which is applied to the input (11) reflects the current through the lighting means (9), the output of a second evaluation branch of the at least two evaluation branches assumes two different logical states, and, if the signal, which is applied to the input (11) reflects the half-bridge current, that the output of the second evaluation branch of the at least two evaluation branches assumes only a constant logical value.

17. A method according to Claim 16, wherein each of the plurality of parallel evaluation branches performs an evaluation of the same signal by means of different sets (S1, S2) of criteria (K11, K12; K21, K22).

18. A method according to Claim 17, wherein the sets of criteria (S1, S2) are thereby selected in such a manner that for each permissible signal type for the input (11) only one set of criteria (S1, S2) is satisfied, so that only one evaluation branch delivers a temporally varying contribution to the actual value signal for the control module, while the other evaluation branches deliver no contribution or a temporally constant contribution.

19. A method according to Claim 16 to 18, wherein no a-priori information about the signal type applied to the input (11) exists in the control circuit.

20. A method according to any one of Claims 16 to 19, wherein the signal type applied to the input (11) is determined adaptively and instantaneously.

21. A method according to Claim 20,
wherein the criteria (K11, K12; K21, K22) are selected from:
- amplitude,
- duty cycle in a defined period, and/or
- frequency components.

## Revendications

1. Circuit de commande pour un appareil d'exploitation pour moyens d'éclairage (9), le circuit de commande comprenant :
- une sortie pour l'émission d'un signal de commande pour l'exploitation du moyen d'éclairage pour le cadencement d'interrupteurs d'un circuit en demi-pont ; et
- une entrée (11) pour un signal ;
**caractérisé en ce que** le circuit de commande comprend en outre :
- au moins deux embranchements d'analyse parallèles, avec lesquels l'entrée (11) est reliée, chacun des au moins deux embranchements comprenant un comparateur (K1, K2), chaque comparateur (K1, K2) étant conçu pour l'introduction d'une tension de référence (Vref1/Vref2) et d'un signal appliqué à l'entrée (11), les tensions de référence (Vref1, Vref2) introduites dans les comparateurs (K1, K2) étant différentes et le signal appliqué à l'entrée (11) et le signal introduit dans les comparateurs (K1, K2) étant le même signal et reproduisant en outre, au choix, un courant de demi-pont ou le courant traversant les moyens d'éclairage (9) ;
- un module de régulation ; et
- une porte logique conçue pour regrouper les sorties des au moins deux embranchements d'analyse avec une porte logique ;
- les au moins deux embranchements d'analyse parallèles étant conçus pour introduire leurs sorties dans le module de régulation en tant que signal de valeur réelle ;
- le module de régulation étant conçu pour déterminer, à l'aide du signal de valeur réelle et d'une valeur de consigne, une valeur de commande et pour l'envoyer à la sortie du circuit de commande en tant que signal de réglage, le signal de réglage pouvant varier en fonction de la valeur de sortie logique de la porte logique ;
- un premier embranchement d'analyse des au moins deux embranchements d'analyse parallèles étant conçu de façon à ce que, lorsque le signal appliqué à l'entrée (11) reproduit (V1(t)) le courant de demi-pont, la sortie du premier embranchement d'analyse est conçue pour adopter deux états logiques et de façon à ce que, lorsque le signal appliqué à l'entrée (11) reproduit (V2(t)) le courant à travers les moyens d'éclairage (9), la sortie du premier embranchement d'analyse est conçue pour adopter uniquement une valeur logique constante ; et
- un deuxième embranchement d'analyse des au moins deux embranchements d'analyse parallèles étant conçu de façon à ce que, lorsque le signal (V2(t)) appliqué à l'entrée (11) reproduit (V2(t)) le courant à travers les moyens d'éclairage (9), la sortie du deuxième embranchement est conçue pour adopter deux états logiques différents et, lorsque le signal (V1 (t)) appliqué à l'entrée (11), reproduit (V1 (t)) le courant de demi-pont, la sortie du deuxième embranchement d'analyse est conçue pour adopter uniquement une valeur logique.

2. Circuit de commande selon la revendication 1, chacun des plusieurs embranchements d'analyse parallèles étant conçu pour effectuer une analyse du signal à l'aide de différents jeux (S1, S2) de critères (K11, K12 ; K21, K22).

3. Circuit de commande selon la revendication 2, les critères (K11, K12 ; K21, K22) étant sélectionnés parmi :
- l'amplitude,
- le rapport cyclique dans une période définie,
- les composantes de fréquences et/ou
- la durée du passage en dessous / dépassement d'au moins une valeur seuil.

4. Circuit de commande selon l'une des revendications précédentes, les jeux de critères (S1, S2) étant sélectionnées de façon à ce que, pour chaque type de signal admissible pour l'entrée (11), un seul jeu de critères (S1, S2) est satisfait, de façon à ce qu'un seul embranchement d'analyse apporte une contribution variable dans le temps au signal de valeur réelle pour le module de régulation, tandis que les autres embranchements d'analyse n'apportent aucune contribution ou une contribution constante dans le temps.

5. Circuit de commande selon l'une des revendications précédentes, dans lequel le signal de commande est conçu pour la commande marche/arrête d'un interrupteur (3, 4) de l'appareil d'exploitation.

6. Circuit de commande selon la revendication 5, dans lequel le signal de commande est conçu pour la commande d'un interrupteur (3, 4) d'un PFC, d'un régulateur de commutation ou d'un onduleur (2) de l'appareil d'exploitation.

7. Circuit de commande selon l'une des revendications précédentes, aucune information a priori concernant le type de signal appliqué à l'entrée (11) n'existant dans le circuit de commande.

8. Circuit de commande selon l'une des revendications précédentes, qui est conçu pour déterminer le type de signal appliqué de manière adaptative et instantanée.

9. Circuit de commande selon la revendication 1, dans lequel la porte logique est une porte OU.

10. Circuit de commande selon l'une des revendications précédentes, qui est conçu comme un ASIC et/ou un micro-contrôleur (12).

11. Circuit de commande selon la revendication 1, dans lequel le signal (V1(t)) reproduisant le courant de demi-pont est soumis à un filtrage passe-bas en externe ou dans le circuit de commande.

12. Circuit de commande selon l'une des revendications précédentes, dans lequel le premier embranchement d'analyse comprend un comparateur (K1) dont la sortie est reliée avec une unité d'analyse de rapport cyclique.

13. Circuit de commande selon l'une des revendications précédentes, qui est conçu pour augmenter ou diminuer la fréquence du signal de commande de demi-pont de préférence d'un incrément en fonction de la valeur de sortie logique de la porte logique.

14. Appareil d'exploitation pour moyens d'éclairage (9), plus particulièrement ballast pour lampes à décharges de gaz, lampes à haute pression ou diodes électroluminescentes, comprenant un circuit de commande selon la revendication 1.

15. Luminaire comprenant un moyen d'éclairage (9) et un appareil d'exploitation selon la revendication 14.

16. Procédé pour l'exploitation d'un appareil d'exploitation pour moyen d'éclairage (9) par l'émission d'un signal de réglage pour le cadencement d'interrupteurs d'un circuit à demi-pont, un signal étant introduit à l'entrée (11) d'un circuit de commande, le procédé étant **caractérisé en ce que** :
- l'entrée (11) étant reliée avec au moins deux embranchements d'analyse parallèles du circuit de commande, chacun des au moins deux embranchements d'analyse comprenant un comparateur (K1, K2) et une tension de référence (Vref1/Vref2) et le signal appliqué à l'entrée (11) étant introduit dans chaque comparateur (K1, K2), les tensions de référence (Vref1, Vref2), introduites dans les comparateurs (K1, K2), étant différentes et le signal appliqué à l'entrée (11) et le signal introduit dans les comparateurs (K1, K2), étant le même signal et reproduisant en outre au choix un courant de demi-pont ou le courant à travers les moyens d'éclairage (9) ;
- les sorties des au moins deux embranchements d'analyse sont regroupées avec une porte logique du circuit de commande ;
- les sorties des au moins deux embranchements d'analyse sont introduites dans un module de régulation du circuit de commande en tant que signal de valeur réelle ;
- le module de régulation détermine, à l'aide de ce signal de valeur réelle et d'une valeur de consigne, une valeur de commande et l'envoie à la sortie du circuit de commande en tant que signal de réglage, le signal de réglage pouvant varier en fonction de la valeur de sortie logique de la porte logique ;
- lorsque le signal appliqué à l'entrée (11) reproduit (V1(t)) le courant de demi-pont, la sortie d'un premier embranchement d'analyse des au moins deux embranchements d'analyse adopte deux états logiques différents et lorsque le signal appliqué à l'entrée (11) reproduit (V2(t)) le courant à travers les moyens d'éclairage (9), la sortie du premier embranchement d'analyse adopte une seule valeur logique constante ; et
- lorsque le signal appliqué à l'entrée (11) reproduit le courant à travers les moyens d'éclairage (9), la sortie du deuxième embranchement d'analyse adopte deux états logiques différents et lorsque le signal appliqué à l'entrée (11) reproduit le courant de demi-pont, la sortie du deuxième embranchement d'analyse des au moins deux embranchements d'analyse adopter une seule valeur logique constante.

17. Procédé selon la revendication 16, chacun des plusieurs embranchements d'analyse parallèles effectuant une analyse du même signal à l'aide de différents jeux (S 1, S2) de critères (K11, K12 ; K21, K22).

18. Procédé selon la revendication 17, les jeux de critères (S1, S2) étant sélectionnés de façon à ce que, pour chaque type de signal admissible pour l'entrée (11), un seul jeu de critères (S1, S2) soit satisfait, de façon à ce qu'un seul embranchement d'analyse apporte une contribution variable dans le temps au signal de valeur réelle pour le module de régulation tandis que les autres embranchements d'analyse n'apportent aucune contribution ou une contribution constante dans le temps.

19. Procédé selon la revendication 16 à 18, aucune information a priori concernant le type de signal appliqué à l'entrée (11) n'existant dans le circuit de commande.

20. Procédé selon l'une des revendications 16 à 19, le type de signal appliqué à l'entrée (11) étant déterminé de manière adaptative et instantanée.

21. Procédé selon la revendication 20,
les critères (K11, K12 ; K21, K22) étant sélectionnés parmi :
- l'amplitude,
- le rapport cyclique dans une période définie et/ou
- les composantes de fréquences.
